# DEMANDE DE BREVET EUROPEEN

(11) **EP 1 990 368 A1**
(43) Date de publication de la demande: **12.11.2008**
(21) Numéro de dépôt: 08008560.8
(22) Date de dépôt: 07.05.2008
(51) Int. Cl.: C08L 95/00, C09D 195/00, E01C 7/20, E01C 7/24

(54) **Matériaux routiers bitumineux, notamment enrobés à froid et graves-émulsions, et tapis routiers formes à partir de ces matériaux**

(30) Priorité: 10.05.2007 FR 0754991
(71) Demandeur: CECA S.A., 92250 La Garenne Colombes (FR)
(72) Inventeur: Jorda, Eric, M., 69005 Lyon (FR)
(74) Mandataire: Lhoste, Catherine

(57) **Abrégé**

Matériau routier bitumineux obtenu par imprégnation, enrobage ou mise en contact d'un granulat, d'un matériau de recyclage, d'un agrégat d'enrobé ou d'un mélange de ces produits avec une émulsion bitumineuse (E), caractérisé par le fait que les particules de bitume de l'émulsion bitumineuse (E) utilisée pour l'imprégnation, l'enrobage ou la mise en contact comportent une fraction (F) représentant 10 à 40% des particules de bitume et étant d' un diamètre médian inférieur ou égal à 0, 6 µm, de préférence compris entre 0,1 1 et 0, 6 µm, le reste des particules de bitume de 1'émulsion étant d' un diamètre médian supérieur ou égal à 1 µm, de préférence compris entre 1 et 20 µm. Le matériau consiste avantageusement en enrobés à froid ou en graves-émulsions.

## Description

La présenté invention porte sur un matériau routier bitumineux obtenu par imprégnation, enrobage ou mise en contact d'un granulat, d'un matériau de recyclage, d'un agrégat d'enrobé ou d'un mélange de ces produits avec une émulsion bitumineuse. Elle porte également sur un tapis routier avantageusement obtenu à température ambiante (c'est-à-dire en général entre 0°C et +40°C) à partir de ce matériau.

Les émulsions bitumineuses comprennent dans la plupart des cas un liant bitumineux, un tensio-actif cationique - on parle alors d'émulsions cationiques -, ou un tensio-actif anionique, - on parle alors d'émulsions anioniques - et de l'eau. Les émulsions cationiques sont particulièrement prisées, à la fois pour la rapidité de leur rupture sur les granulats et pour les qualités d'adhésivité qui sont généralement obtenues entre les granulats et l'émulsion rompue conférant aux tapis routiers qui viennent juste d'être réalisés, de bonnes propriétés mécaniques. En sus des composants énoncés plus haut, les émulsions cationiques sont souvent acidifiées par ajout d'acide au sein de la phase aqueuse servant à la fabrication de l'émulsion et les émulsions anioniques sont généralement fabriquées en milieu alcalin.

Les matériaux bitumineux obtenus par enrobage ou mise en contact de granulats à l'aide d'émulsions bitumineuses sont connus de longue date. La profession distingue en particulier les enrobés à froid coulés, ouverts, semi-denses, denses, stockables, les graves-émulsions, les enduits superficiels et les couches d'accrochage.

Pour la réalisation de tapis routiers, un type de matériaux bitumineux comprend les enrobés à froid ouverts, semi-denses, denses, les enrobés à froid stockables ainsi que les graves-émulsions. Le choix optimisé de l'émulsion (nature et quantité de l'émulsifiant, concentration en bitume, pH) permet de résoudre dans la majorité des cas, partiellement ou totalement, les problèmes d'enrobage, de transport et de mise en place de l'enrobé sous sa forme foisonnée. Cependant, une fois l'enrobé étalé sous forme de tapis, intervient l'étape de compactage dont le rôle est d'assurer la montée en cohésion, c'est-à-dire une bonne adhésivité entre bitume et granulat, afin de permettre au tapis de supporter le trafic, temporairement interrompu pendant la mise en place dans le cas de réfection ou de rénovation de chaussées. Cette cohésion est obtenue par le serrage du matériau, accompagné généralement de l'expulsion de phase aqueuse et d'air. Les matériaux enrobés à froid présentent un fort pouvoir frottant, ce qui gêne le serrage : les compacités obtenues à froid sont très souvent inférieures aux compacités obtenues à partir des mêmes matériaux enrobés à chaud avec le même liant. Or il est bien connu de l'homme du métier que la valeur de la compacité et le départ d'eau au compactage influent sur la cohésion du matériau serré à froid. Ainsi, on constate qu'actuellement le succès dans la réalisation de chaussées soumises à des trafics intenses (T1 ou plus) ne dépend pas que de la technique mais aussi des conditions météorologiques le jour du chantier et même le jour suivant. Un soleil franc, une température élevée ou un vent suffisant contribuent au séchage du tapis et à sa montée en cohésion.

Dans tous les cas d'application d'enrobés à froid considérés ici (stockables, ouverts, semi-denses, denses et graves-émulsions), (ré)ouvrir rapidement à la circulation pose d'autant plus de problèmes que le trafic est intense. Dans le cas d'une ouverture précoce, un départ de granulats se produit en surface du revêtement au contact des pneumatiques, ce qui fragilise le tapis vis-à-vis des intempéries et dégrade sa qualité de surface. Ce phénomène est connu dans la profession routière, essentiellement pour les enduits, sous le nom de « plumage », mais s'observe également régulièrement sur les enrobés à froid utilisés en couche de roulement. Il est donc intéressant d'obtenir une cohésion importante en surface le plus rapidement possible pour éviter de compromettre les propriétés finales globales du tapis.

Une amélioration de cohésion rapide peut être apportée partiellement par un accroissement de l'efficacité du compactage par des additifs comme décrit dans EP 1 057 873 et WO 02/00795, mais cette amélioration est limitée et ne concerne pas la surface.

Elle peut aussi être apportée par ajout d'une quantité importante de ciment comme décrit dans WO 02/066394, mais le surcoût est alors important et les émulsions doivent être très chargées en tensio-actif non ionique, ce qui pose des problèmes de résistance à l'eau par la suite et ne stabilise pas mieux la surface au jeune âge.

Une autre solution consiste à ajouter des agents rupteurs à différents moments du procédé comme décrit dans WO 94/23129 et dans les documents-brevets cités dans ce dernier. Ces méthodes sont généralement coûteuses et nécessitent des modifications d'appareillage, voire de nouveaux appareillages dédiés, et il n'est pas fait mention d'amélioration des propriétés au contact des pneumatiques. Dans EP 0 896 985, il est fait appel à un mélange d'émulsion de stabilité différente vis-à-vis des granulats (une émulsion dite « rapide » et une émulsion dite « lente ») pour contrôler le temps de rupture quelle que soit la teneur en eau du granulat et faciliter la mise en oeuvre et le compactage tout en gardant la capacité à développer une cohésion importante (mais équivalente à celle obtenue avec un enrobé à froid standard qui est parfois difficile à poser). On résout donc ici la difficulté de trouver un compromis entre maniabilité et cohésion générale de l'enrobé, mais il n'est nullement question d'améliorer la cohésion de surface.

Dans US 5 518 538, est revendiquée l'utilisation d'émulsions dont le diamètre des globules de bitume est centré sur deux valeurs différentes séparées d'un facteur 2 à 10. Ces émulsions dont la teneur en bitume est supérieure à 75% donnent une vitesse de coalescence accrue mais ne permettent donc pas l'enrobage de granulats réactifs et sont destinées uniquement à des applications de répandage (« sealing » ou enduits). Aucun résultat de mesures granulométriques n'est fourni dans ce brevet américain.

Dans WO 96/04427, il est fait mention de la difficulté d'obtenir une bonne adhésion avant des mois entre bitume et granulats dans les enrobés à froid réalisés avec des bitumes durs, ce qui empêche le carrotage pour analyse des chaussées. Selon WO 96/04427, on propose de résoudre ce problème par l'utilisation de deux émulsions d'indice de rupture différent dans un procédé d'enrobage en deux étapes. Une première émulsion surstabilisée (de diamètre médian compris entre 2 à 8 µm et de déviation standard inférieure à 0,3) est utilisée entre 1 et 4% pour réaliser un premier enrobage. L'enrobé peut alors être stocké plusieurs semaines, et un deuxième enrobage avec 3 à 7% d'une émulsion d'indice de rupture inférieur à la première est réalisé juste avant la pose. Ce procédé ne mentionne pas l'utilisation d'émulsion de diamètre submicronique et comporte l'inconvénient de doubler l'étape d'enrobage qui est une étape coûteuse en temps et apporte une solution pour la cohésion de masse critique pour le carrotage mais ne change en rien les propriétés de surface en contact direct avec les pneus.

JP 2001 081326 mentionne un procédé de fabrication d'émulsion de bitume permettant d'obtenir une répartition granulométrique discrète comportant deux et préférentiellement trois pics dont un pic inférieur à 1,1 µm. Il n'est pas mentionné dans ce document de moyen de contrôle de cette répartition granulométrique qui est a priori subie par le fait de l'appareillage utilisé. Le diamètre médian des particules de plus petite taille est quant à lui systématiquement supérieur à 0,5 µm et moins de 5% de l'émulsion semblent présenter un diamètre inférieur à 0,5 µm. Les diamètres préférés selon ce document pour les particules de plus petite taille sont compris entre 0,9 et 1,6 µm. Ce document avance des avantages de cette émulsion en termes de filmification et de temps de séchage, mais il ne concerne que des applications telles que l'étanchéité dans le bâtiment, où il n'y a pas de notion de liant et d'adhésion entre granulats. Les émulsifiants utilisés dans le cadre de ce document sont d'ailleurs des émulsifiants anioniques et non-ioniques qui sont moins préférés selon l'invention, car conduisant à de plus faibles performances mécaniques au jeune âge dans le domaine routier.

EP 1 649 925 décrit la fabrication et l'utilisation d'émulsions de bitume dont les particules ont un diamètre médian inférieur à 0,5 µm pour la fabrication d'enrobés bitumineux de cohésion au jeune âge améliorée. Dans ce document, il n'est fait aucune mention particulière de la cohésion de surface mais l'appareil utilisé pour mesurer la cohésion est un cohésivimètre qui sollicite essentiellement la surface sur une épaisseur de 1 à 2 cm. Un inconvénient réside dans le fait que le diamètre médian de l'émulsion est fixé par la concentration en tensio-actif du savon utilisé et qu'il est donc impossible d'adapter la teneur en émulsifiant de l'émulsion à la nature du granulat à enrober sans en changer la taille de particule. Ceci peut conduire en cas de surdosage à des problèmes de maniabilité connus de l'homme du métier et rend la technique peu adaptable.

Il apparaît donc qu'aucune donnée de l'art antérieur ne propose de solution technique souple et adaptable à toutes sortes de granulats pour résoudre spécifiquement le défaut de cohésion de surface au jeune âge observé sur les enrobés à froid pour couche de roulement par comparaison avec les techniques à chaud. Cela se traduit en pratique par une utilisation quasi-exclusive des enrobés à froid pour des chaussées à trafic moyen ou faible.

La présente invention propose des enrobés à froid et des graves-émulsions, obtenus par enrobage et pose avec du matériel routier standard, dont la cohésion de surface au jeune âge (dans les premières 24 heures) est nettement améliorée (de 50% et plus) par rapport aux enrobés à froid et graves-émulsions fabriqués selon l'art antérieur.

La présente invention se distingue avantageusement de l'invention décrite dans EP 1 649 925 par le fait que l'émulsion utilisée présente une stabilité ajustable au granulat sans perte des avantages en cohésion de surface. Elle est particulièrement intéressante pour les chaussées à fort trafic, dans la mesure où elle permet d'obtenir des tapis routiers dont la cohésion de surface soumise aux agressions des pneumatiques est suffisante pour stabiliser l'ouvrage avant réouverture au trafic sans qu'il ne soit nécessaire d'attendre plusieurs jours.

Les émulsions qui servent pour la présente invention sont caractérisées par le fait qu'elles comportent un pourcentage bien déterminé de particules de bitumes dont le diamètre, mesuré par granulométrie laser, est inférieur ou égal à 0,6 µm et préférentiellement inférieur ou égal à 0,55 µm, et de façon davantage préférée inférieur ou égal à 0,5 µm. Ces émulsions de composition granulométrique déterminée peuvent par exemple être obtenues à partir de l'émulsion dont les particules ont un diamètre médian inférieur ou égal à 0,6 µm. (préférentiellement 0,55 µm, et de façon davantage préférée inférieur ou égal à 0,5 µm) par simple mélange avec une autre émulsion, par intégration de cette émulsion dans la phase aqueuse servant à fabriquer l'émulsion finale ou par toute autre méthode connue de l'homme du métier permettant de contrôler quantitativement la fraction produite de particules dispersées de diamètre inférieur à 0,6 µm dans l'émulsion finale.

L'émulsion dont les particules ont un diamètre médian inférieur ou égal à 0,6 µm (de façon préférée inférieur ou égal à 0,55 µm et de façon davantage préférée inférieur ou égal à 0,5 µm) peut être obtenue par le procédé décrit dans EP 1 649 925 ou par toute autre méthode connue de l'homme du métier. L'autre émulsion de bitume qui sert alors au mélange ou le complément qui est fabriqué à partir de cette émulsion de base n'a aucune particularité si ce n'est une teneur en tensio-actif choisie pour obtenir une émulsion finale de stabilité adaptée au granulat à enrober.

Dans EP 1 649 925, nous expliquions qu'il est connu de l'homme du métier que la diminution du diamètre médian d'une émulsion améliore la qualité d'enrobage des granulats mais que nous avions découvert que la cohésion d'un enrobé ne suit pas cette progression en fonction du diamètre médian des globules de l'émulsion. Dans le domaine généralement utilisé dans l'industrie routière, entre 2 et 10 µm, et même en dessous, la cohésion reste quasiment insensible à la granulométrie de l'émulsion jusqu'à un seuil de 0,6 µm. En dessous de ce seuil, la cohésion de l'enrobé augmente brutalement.

Nous avons découvert ici que cette propriété pouvait être conservée même avec de faibles proportions de ce type d'émulsion en mélange avec une émulsion de granulométrie non contrôlée. Cette propriété peut être mise à profit dans la présente invention pour régler la teneur en émulsifiant de l'émulsion finale et ajuster ainsi la stabilité de l'émulsion à la réactivité du granulat.

Les enrobés à cohésion de surface élevée fabriqués selon la présente invention peuvent donc être avantageusement fabriqués à l'aide d'un mélange en proportions déterminées d'émulsions de bitume cationiques dont une émulsion présente des particules de diamètre médian inférieur ou égal à 0,6 µm (de façon préférée inférieur ou égal à 0,55 µm et de façon encore plus préférée inférieur ou égal à 0,5 µm) et dont l'autre émulsion a une teneur en émulsifiant ajustée pour obtenir une teneur finale en émulsifiant du mélange adaptée au granulat à enrober. Cependant, il va de soi pour l'homme du métier que l'avantage existe aussi avec des mélanges d'émulsions anioniques ou non-ioniques, voire mixtes anioniques/non-ioniques ou cationiques/non-ioniques.

Les liants bitumineux mis en oeuvre dans cette invention peuvent être choisis parmi les liants bitumineux usuellement mis en oeuvre dans les émulsions bitumineuses pour graves et enrobés à froid pour couches de roulement, leur pénétrabilité étant en général comprise entre 70/100 et 500.

Les émulsions peuvent être préparées avec un ou plusieurs liants ; dans ce dernier cas, les différents liants peuvent être mélangés à chaud avant l'émulsification ou les deux émulsions (ou plus) peuvent être préparées contenant chacune un liant différent.

Les types d'enrobés à froid selon l'invention, sont obtenus par malaxage des granulats humidifiés avec l'eau d'ajout et de l'émulsion bitumeuse selon les techniques et au moyen d'appareillages connus. Les étapes d'enrobage, de rupture de l'émulsion, de transport éventuel, de déchargement et de mise en place sont réalisées selon le procédé habituel de l'entreprise routière et ne nécessitent donc pas de modification du matériel ou de modifications des réglages. Ce que l'on vise à obtenir, dans ces cas, est une cohésion de surface améliorée une fois toutes les étapes précédant l'ouverture au trafic réalisées.

La présente invention a donc d'abord pour objet un matériau routier bitumineux obtenu par imprégnation, enrobage ou mise en contact d'un granulat, d'un matériau de recyclage, d'un agrégat d'enrobé ou d'un mélange de ces produits avec une émulsion bitumineuse (E), caractérisé par le fait que les particules de bitume de l'émulsion bitumineuse (E) utilisée pour l'imprégnation, l'enrobage ou la mise en contact comportent une fraction (F) représentant 10 à 40% des particules de bitume et étant d'un diamètre médian inférieur ou égal à 0,6 µm, de préférence compris entre 0,1 µm et 0,6 µm, le reste des particules de bitume de l'émulsion étant d'un diamètre médian supérieur ou égal à 1 µm, de préférence compris entre 1 et 20 µm.

On entend par agrégat d'enrobé, tout matériau provenant de la destruction de tapis d'enrobés et par matériau de recyclage tout type de matériau issu de la récupération de déchets industriels susceptibles d'êtres recyclés dans la fabrication d'enrobés routiers (matériaux de démolition, mâchefer, laitiers sidérurgiques, pneus ...). De préférence, selon la présente invention, le matériau consiste en enrobés à froid ou en graves-émulsions.

Les diamètres médians sont, selon l'invention, mesurés par granulométrie laser. Par diamètre médian, on entend la valeur du diamètre des particules de bitume dispersées qui divise exactement la population répertoriée en deux moitiés de volume égal.

La fraction (F) de particules de bitume a notamment un diamètre médian inférieur ou égal à 0,55 µm, en particulier inférieur ou égal à 0,5 µm. Elle peut représenter en particulier 20 à 30% des particules de bitume.

Le reste des particules de bitume de.l'émulsion a par exemple un diamètre médian de 2 à 10 µm.

Conformément à un mode de réalisation particulier du matériau selon la présente invention, l'émulsion bitumineuse (E) est formée par le mélange d'au moins deux émulsions (A) et (B), dont au moins une (A) est composée de particules de bitume d'un diamètre médian inférieur ou égal à 0,6 µm, en particulier inférieur ou égal à 0,55 µm, lesquelles constituent la fraction (F) précitée des particules de bitume, la ou les autres émulsions (B) étant composée(s) de particules d'un diamètre médian supérieur ou égal à 1 µm, en particulier les particules de la ou des émulsions (B) ayant un diamètre médian de 2 à 10 µm.

La ou les émulsions (A) composée(s) de particules de bitume d'un diamètre médian inférieur ou égal à 0,6 µm, en particulier inférieur ou égal à 0,55 µm, de façon plus particulière inférieur ou égal à 0,5 µm peut (peuvent) représenter 10 à 40% en poids, en particulier 20 à 30% en poids du mélange.

Une émulsion composée de particules de bitume d'un diamètre médian inférieur ou égal à 0,6 6 µm a été avantageusement préparée par le procédé comportant les étapes suivantes :
(a) le ou les tensio-actifs, éventuellement en présence d'au moins un acide dans le cas d'une émulsion cationique ou en présence d'au moins une base dans le cas d'une émulsion anionique, sont formulés sous la forme d'une solution aqueuse concentrée, en particulier à plus de 30% massique ;
(b) on procède à l'ajout progressif de bitume chauffé, à une température comprise entre 50 et 120°C et avec un débit contrôlé, à la solution concentrée de tensio-actif(s) maintenue sous agitation, jusqu'à ce que la teneur en bitume de l'émulsion à la fin de cette étape d'émulsification soit supérieure ou égale à 90% en poids ; puis
(c) la teneur en bitume de l'émulsion est abaissée jusqu'à une teneur comprise de préférence entre 60% et 80% en poids par dilution sous agitation avec de l'eau dont la température est comprise entre 20 et 90°C, et, de préférence, entre 40 et 80°C.

Le système d'agitation des étapes (b) et (c) peut être une turbine, une ancre raclante, une hélice ou, de préférence un fouet dont la vitesse d'agitation est supérieure à 50 tpm ou tout autre système équivalent en termes de capacité de mélangeage.

La ou les émulsions autres que celle(s) composée(s) de particules de bitume d'un diamètre médian inférieur ou égal à 0,6 µm, en particulier inférieur ou égal à 0,55 µm, de préférence inférieur ou égal à 0,5 µm, peut ou peuvent avoir une teneur en tensio-actif réglée pour adapter la stabilité du mélange d'émulsions au granulat à enrober. De telles autres émulsions sont les émulsions classiques dans l'industrie routière, ayant un diamètre médian par exemple de l'ordre de 2 à 10 µm

En règle générale, l'industrie routière distingue différents types d'émulsions en fonction de leur stabilité vis à vis des granulats. Cette stabilité est adaptée à l'application et on utilise des émulsions dites à « rupture rapide » pour le répandage, des émulsions à « rupture moyenne » ou « rupture lente » pour l'enrobage et des émulsions à « rupture lente » ou surstabilisées pour l'imprégnation. Pour les émulsions cationiques, on peut trouver plus de détail sur cette classification dans la norme NF EN 13808. Dans le cas de l'enrobage, qui nous intéresse particulièrement dans le cadre de la présente invention, l'émulsion doit être suffisamment stable en présence du granulat pour se répartir sur toute la surface minérale mais pas trop pour que la déstabilisation ait lieu avant l'arrêt du malaxage afin d'éviter la formation d'un film continu de liant dans l'enrobé lors du stockage qui pose ensuite de gros problèmes de maniabilité dans les étapes en aval du procédé. Le temps de malaxage est une caractéristique variable car dépendante de la centrale d'enrobage utilisé. La réactivité du granulat vis-à-vis d'une émulsion est une variable dépendant de la nature minérale du granulat et de son état de division. Il faut donc adapter la stabilité de l'émulsion au type de granulat utilisé et au matériel d'enrobage pour éviter un défaut d'enrobage en cas de stabilité trop faible ou un manque de maniabilité de l'enrobé au déchargement et à la pose en cas de stabilité trop importante. Cette adaptation de la stabilité de l'émulsion est généralement réalisée par le choix du tensio-actif et son dosage dans l'émulsion. Cette adaptation est très facile pour les émulsions de bitume industrielles standard de diamètre médian compris entre 2 et 10 µm, car le matériel utilisé pour les fabriquer, à savoir le plus souvent moulin colloïdal ou mélangeur statique sous pression, permet de travailler avec une large gamme de dosage en tensio-actif et notamment avec des teneurs aussi faible que 0,15%.

Dans le cas des émulsions composées de particules de bitume de diamètre médian inférieur ou égal à 0,6 µm, le procédé de fabrication peut imposer une nature d'émulsifiant et une teneur en émulsifiant qui conduisent à une émulsion de stabilité trop importante par rapport au granulat et au matériel d'enrobage utilisé. Le mélange avec une émulsion standard dont on peut abaisser à volonté la teneur en émulsifiant permet alors de régler la teneur globale en émulsifiant pour adapter la stabilité de l'émulsion selon l'invention au granulat et au matériel d'enrobage utilisé tout en gardant les avantages en cohésion d'une émulsion dont les particules ont un diamètre médian inférieur ou égal à 0,6 µm.

L'émulsion (E) ou, dans le cas du mélange précité selon le mode de réalisation préféré de la présente invention, chaque émulsion peut être préparée avec un ou plusieurs liants bitumineux ; dans ce dernier cas, les différents liants peuvent être mélangés à chaud avant l'émulsification. Dans le cas du mélange de deux émulsions ou plus, on peut préparer chacune de celles-ci contenant au moins un liant, et on les mélange ensuite pour donner une émulsion dite mixte, qui sera mise en contact avec les granulats ou similaires pour la réalisation du matériau.

La ou les émulsions bitumineuses utilisées pour l'enrobage, l'imprégnation ou la mise en contact contient ou contiennent au moins un tensio-actif anionique et, le cas échéant, au moins une base, ou au moins un tensio-actif cationique et, le cas échéant, au moins un acide, en particulier un tensio-actif cationique et, le cas échéant, au moins un acide.

Le ou les tensio-actifs est ou sont choisis en particulier parmi les alkyl(ène)polyamines, les alkyl(ène)polyamines oxyalkylées, les sels d'alkyl(ène)ammonium quaternaire, les alkyl(ène)amidoamines et leurs dérivés de cyclisation alkyl(ène)imidazolines, avec une chaîne alkyle comprenant entre 8 et 22 atomes de carbone, les alkyl(ène) polyamines oxyalkylées et, plus particulièrement la suif dipropylène triamine oxypropylée (amines, N-suif propanol-2 [[[ (amino-3 propyl)amino]-3 propyl]imino]-1,1' bis, RN = 97592-79-5), cette dernière étant industriellement bien représentée par le Polyram® SL commercialisé par CECA S.A.

La ou les émulsions bitumineuses utilisées pour l'enrobage, l'imprégnation et la mise en contact peut ou peuvent aussi contenir au moins un co-tensio-actif non ionique.

On peut utiliser aussi des mélanges de tensio-actifs cationiques ou de tensio-actifs cationiques et de co-tensio-actifs non ioniques , la limitation étant liée à la concentration maximale acceptable en solution pour éviter la gélification. On ne sortirait pas du cadre de l'invention en mettant en oeuvre toute technique connue de l'homme du métier permettant d'éviter la formation de gels dans les solutions de tensio-actifs concentrées comme l'utilisation de cosolvants et/ou d'hydrotropes.

Comme indiqué ci-dessus, on préfère ajouter aux phases aqueuses de tensio-actif(s) cationique(s) -tensio-actifs préférés - une certaine quantité d'acide(s), en général choisi(s) parmi HCl, H₃PO₄.

Les bitumes ou liants bitumineux peuvent être choisis parmi les liants bitumineux usuellement mis en oeuvre dans les émulsions bitumineuses pour graves émulsions et/ou enrobés à froid pour couches de roulement ; leur pénétrabilité est en général comprise entre 70/100 et 500. Leur nature chimique dépend du brut ou des bruts dont ils sont issus. On distingue les bitumes paraffiniques, préférés par la Société déposante, et les bitumes naphténiques.

Les enrobés à froid et graves émulsions selon l'invention peuvent être obtenus par malaxage des granulats humidifiés avec de l'eau d'ajout et de l'émulsion bitumineuse définie ci-dessus selon les techniques et au moyen d'appareillages connus et utilisés de manière habituelle dans l'industrie routière. Les étapes d'enrobage, de rupture de l'émulsion, de transport éventuel, de déchargement et de mise en place sont réalisées selon le procédé habituel de l'entreprise routière et présentent l'avantage de ne pas nécessiter de modifications de matériel ou de modifications des réglages, tout en montrant une cohésion améliorée une fois toutes les étapes précédant l'ouverture au trafic réalisées

La présente invention porte aussi sur l'utilisation d'un matériau tel que défini ci-dessus pour former un tapis routier ou une chaussée de forte résistance au trafic dans les premières 24 heures (au jeune âge). En effet, l'invention est particulièrement intéressante pour les chaussées à fort trafic, dans la mesure où elle permet d'obtenir des tapis routiers dont la cohésion est suffisante pour stabiliser l'ouvrage avant réouverture au trafic sans qu'il ne soit nécessaire d'attendre plusieurs jours.

La présente invention porte également sur un tapis routier obtenu par compactage d'un matériau tel que défini ci-dessus.

Enfin, la présente invention porte sur une émulsion de bitume susceptible d'être obtenue par mélange :
- d'au moins une émulsion de bitume composée de particules de diamètre médian inférieur ou égal à 0,6 :m (Emulsion A) ; et
- d'au moins une émulsion de bitume composée de particules de diamètre médian supérieur ou égal à 1 :m (Emulsion B),
les particules de bitume d'un diamètre médian inférieur ou égal à 0,6 :m de la ou des émulsions (A) représentant 10 à 40 % des particules de bitume totales des émulsions (A) et (B).

Les particules de bitume de la ou des émulsions (A) peuvent en particulier avoir un diamètre médian inférieur ou égal à 0,55 :m, en particulier inférieur à 0,5 :m. Les particules de bitume d'un diamètre médian inférieur ou égal à 0,6 :m de la ou des émulsions (A) peuvent représenter en particulier 20 à 30 % des particules de bitume totales des émulsions (A) et (B).

Les particules de bitume de la ou des émulsions (B) peuvent avoir un diamètre médian de 2 à 10 m.

Par ailleurs, la ou les émulsions (A) peut (peuvent) représenter 10 à 40 % en poids, en particulier 20 à 30 % en poids du mélange.

Les Exemples suivants illustrent la présente invention sans toutefois en limiter la portée. Dans ces exemples, les pourcentages sont en poids sauf indication contraire.

### Protocole A : Préparation d'une solution de tensio-actif concentrée en vue de la fabrication d'une émulsion de diamètre médian 0,5 µm

On place un bécher dans un bain-marie et on y a installé à la fois une hélice d'agitation et une électrode pH avec compensation de température. On met dans le bécher la quantité d'eau nécessaire pour fabriquer le savon désiré. On démarre l'agitation et la chauffe à T=50°C de l'eau contenue dans le bécher.

On fait chauffer le tensio-actif choisi à T=60°C sur une plaque chauffante régulée.

On attend que l'eau et le tensio-actif soient en température. On commence à ajouter le tensio-actif (ici du Polyram® SL commercialisé par la Société CECA) dans l'eau avec un compte-goutte de manière à faire remonter le pH jusqu'à 5-6 environ. On acidifie avec HCl à 37% (à température ambiante) jusqu'à obtenir un pH compris entre 1 et 2 de manière à dissoudre tout le tensio-actif ajouté. On rajoute du tensio-actif jusqu'à obtenir un pH compris entre 5 et 6 environ, puis on acidifie de nouveau jusqu'à obtenir un pH compris entre 1 et 2 et ainsi de suite jusqu'à obtenir un peu de gel qui ne se dissout pas dans la solution (ce qui correspond à une concentration en tensio-actif voisine de 23% pour le Polyram® SL). A partir de ce point, on acidifie jusqu'à obtenir un pH de 0,6. On continue d'ajouter le tensio-actif à raison d'environ 1 g toutes les 5 minutes en ajoutant à chaque fois la quantité d'acide nécessaire pour ramener le pH vers 0,5-0,6 environ. Par pesée de l'ensemble bécher + hélice, on a pu contrôler la concentration en tensio-actif à laquelle on se trouve en cours de la fabrication. Ainsi, on peut arriver jusqu'à une concentration en tensio-actif voisine de 28%.

Pour aller jusqu'à 31% (qui est la concentration nécessaire pour obtenir le diamètre médian visé ici), on laisse évaporer l'eau doucement en faisant des ajouts d'acide quand on voit un peu de gel se former.

### Protocole B : Préparation et analyse d'une émulsion d'un diamètre médian inférieur à 0,6 µm

On prépare 167 g d'émulsion à 60% de bitume de diamètre médian 0,5 µm selon le mode opératoire suivant :

On fait chauffer sur une plaque chauffante régulée, 100 g de bitume 70/100 Total Donges à une température de 108°C.

On fait chauffer 60 g d'H₂O désionisée à T=60°C sur une plaque chauffante régulée.

On place 7 g de savon concentré préparé comme indiqué au Protocole A (T=ambiante) au fond d'un bécher de 600 cm³ (forme haute : 12 cm hauteur et 8,5 cm de diamètre). On met en place le système d'agitation qui repose sur le fond du bécher (fouet de cuisine métallique de diamètre 6 cm sur une hauteur de 13 cm monté sur une tige d'agitateur et moteur d'agitation Léroy-Somer de 245 W, couple de 0,8 N.m), sa vitesse ayant été préréglée à 600 tpm.

On attend que l'eau désionisée et le bitume soient en température pour fabriquer l'émulsion, puis on démarre le fouet (V=600 tpm) et on verse progressivement le bitume chaud sur le savon concentré pendant 1mn à 1mn15sec (pas moins car un débit plus rapide engendre une émulsion inverse) ; lorsque tout le bitume est versé, on attend 15 à 20 secondes sous agitation avant de verser l'eau désionisée en environ 5 secondes sur l'émulsion de bitume concentrée ; on laisse tourner le fouet encore pendant environ 1 minute 30 secondes pour homogénéiser l'émulsion.

L'analyse granulométrique de l'émulsion est réalisée à l'aide d'un granulomètre laser Mastersizer S de Malvern Instruments. Les coefficients pris pour les calculs sont (1,62, 0,0055) pour le bitume et 1,33 pour l'eau. Les valeurs données dans le texte comme diamètre médian de l'émulsion correspondent à la valeur D (v, 0,5) donnée par l'appareil, c'est-à-dire la valeur maximum du diamètre des particules de bitume dispersées représentant 50% du volume de l'émulsion. Dans l'exemple donné ici, elle est de 0,52 µm.

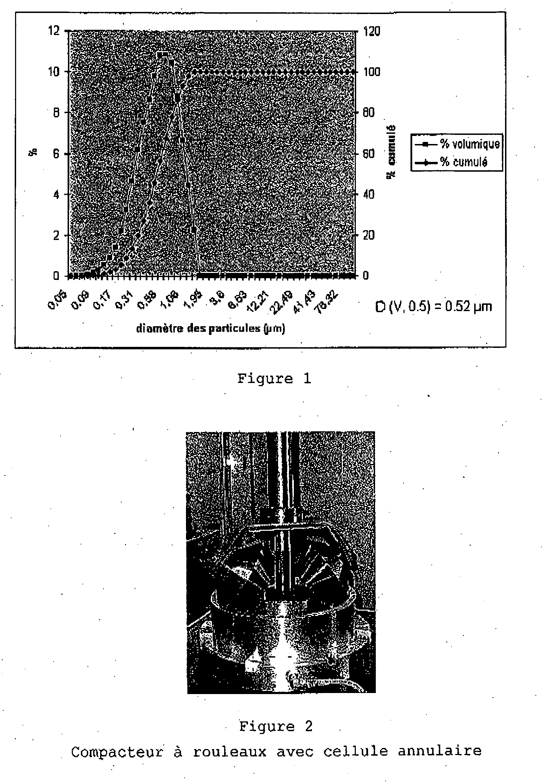

La répartition granulométrique de l'émulsion fabriquée est donnée dans la Figure 1 du dessin annexé.

### Protocole C : Fabrication et mesure de cohésion de surface des enrobés à l'émulsion

La mesure de cohésion de surface des enrobés est réalisée à l'aide d'un appareil à cisaillement circulaire modèle : RST 01.PC (conçu par Mr Dietmar Schulze - Allemagne), qui impose une déformation jusqu'à la rupture à un enrobé compacté qui est placé dans une cellule annulaire surmontée d'un couvercle relié à deux capteurs de force.

La réalisation d'une mesure de cohésion pour un enrobé passe nécessairement par les étapes qui sont décrites ci-dessous :

### 1^{ére} étape : Fabrication de l'enrobé et mise en place de l'enrobé dans la cellule de mesure annulaire de l'appareil à cisaillement circulaire

Pour effectuer une mesure de cohésion, il faut fabriquer environ 1350 g d'enrobé de la manière suivante :
- peser dans un bol en inox 1200 g de granulat à la composition granulométrique requise ;
- ajouter le pourcentage d'eau requis par rapport au granulat ;
- mélanger le tout quelques secondes avec une spatule pour bien répartir l'eau sur tout le granulat ;
- ajouter rapidement la quantité d'émulsion de bitume requise sur le granulat ;
- mélanger avec une spatule jusqu'à la rupture de l'émulsion sur le granulat ;
- remplir la partie inférieure de la cellule annulaire de l'appareil de mesure avec l'enrobé, en le répartissant le mieux possible.

La cellule annulaire est composée de deux éléments : une partie inférieure munie d'ailettes qui contient l'enrobé et un couvercle lui aussi muni d'ailettes. Les caractéristiques de la partie inférieure de la cellule annulaire utilisée sont les suivantes : petit diamètre = 100 mm, grand diamètre = 200 mm, profondeur = 40 mm, et 20 ailettes de 44 mm de largeur et 5 mm de hauteur qui sont vissées sur son fond. Les caractéristiques du couvercle de la cellule annulaire utilisée sont les suivantes : petit diamètre = 105 mm, grand diamètre = 195 mm et 20 ailettes de 44 mm de largeur et 5 mm de hauteur qui sont vissées dessous.

On attend ensuite 45 minutes après la rupture dé l'émulsion sur le granulat avant de compacter l'enrobé à l'intérieur de la cellule de mesure.

### 2^{ème} étape : Compactage de l'enrobé à l'intérieur de la cellule de mesure, mise en place du couvercle pour faire l'empreinte des ailettes dans l'enrobé avant son séchage et retrait du couvercle pour le séchage

Le compactage de l'enrobé à l'intérieur de la cellule de mesure est réalisé à l'aide d'un compacteur à rouleaux tel que représenté sur la Figure 2 du dessin annexé, spécialement conçu pour permettre de produire un réarrangement au sein de l'enrobé afin de simuler au mieux ce qui se passe sur le terrain lors de cette phase.

Ce compacteur à rouleaux est constitué par un bras pouvant tourner autour de son axe central grâce à un moteur électrique. Ce bras est équipé d'un rouleau en acier inox à chaque extrémité et est muni d'un support sur lequel on peut mettre plusieurs masses de 10 kg chacune, de manière à pouvoir adapter le compactage à ses propres besoins.

La largeur des rouleaux en contact avec l'enrobé est égale à 45 mm. Le support du bras peut accepter jusqu'à 70 kg.de charge. Le moteur électrique qui fait tourner le bras du compacteur a une puissance égale à 1400W ; il est à la fois équipé d'un variateur de fréquence et d'un réducteur qui divise la vitesse de rotation du moteur par 5, ce qui correspond à une vitesse de rotation maximum de 300 tpm.

Pour compacter un enrobé on procède de la manière suivante:
- on pose le bras avec ses deux rouleaux sur l'enrobé ;
- on charge le support du bras avec la masse désirée ; et
- on fait tourner le bras autour de son axe central à la vitesse désirée en faisant varier la fréquence d'alimentation du moteur électrique d'entraînement.

Les conditions de compactage utilisées pour les présents essais sont les suivantes :
- 1 minute avec 0 kg de charge sur le support du bras à V=1 km/h au centre de l'anneau ;
- 1 minute avec 10 kg de charge sur le support du bras à V=1 km/h au centre de l'anneau ;
- 1 minute avec 20 kg de charge sur le support du.bras à V=1 km/h au centre de l'anneau ;
- 1 minute avec 30 kg de charge sur le support du bras à V=1 km/h au centre de l'anneau ;
- 1 minute avec 40 kg de charge sur le support du bras à V=1 km/h au centre de l'anneau ;
- 1 minute avec 50 kg de charge sur le support du bras à V=1 km/h au centre de l'anneau.

La charge est augmentée progressivement de manière à ne pas enfoncer trop les deux rouleaux dans l'enrobé avant de démarrer la rotation du bras. Ces conditions de compactage permettent d'obtenir des compacités de l'ordre de 80%, mesurées par différences de hauteur dans la cellule de mesuré.

Lorsque l'enrobé est compacté, on pose le couvercle de la cellule de mesure sur sa surface et on enfonce les ailettes de 5 mm en utilisant un banc de charge de marque Instron modèle 1186, équipé d'un capteur de force de 200 KN, pour faire l'empreinte des ailettes du couvercle à la surface de l'enrobé. Dès que l'on a terminé d'enfoncer le couvercle, on sort celui-ci pour laisser sécher l'enrobé à l'air libre pendant la durée voulue.

### 3^{éme} étape : Mesure de la cohésion de surface des enrobés

- lorsque est écoulé le temps de séchage de l'enrobé, fixé à 19 heures dans les présents essais, on remet le couvercle en place à la surface de l'enrobé en prenant soin de remettre les ailettes dans leurs empreintes ;
- on place la cellule annulaire surmontée de son couvercle sur l'appareil de mesure de cohésion, modèle RSTC 01.PC équipé de deux capteurs de force de 50 kg chacun, conçu par M. Dietmar Schulze-Allemagne ;
- on relie le couvercle aux deux capteurs de force de l'appareil ;
- on lance la mesure de cohésion de l'enrobé en imposant une pression de 0,2b sur le couvercle et une déformation circulaire en faisant tourner la cellule annulaire à V=2 deg/mn par rapport au couvercle qui reste fixe entre les deux capteurs de force, de manière à atteindre la rupture de l'enrobé et aller un peu au-delà ;
- en même temps, l'appareil enregistre la force de résistance à la déformation de l'enrobé et le temps, ce qui permet d'obtenir des graphes : Force=f(temps) et de déterminer la force nécessaire à la rupture de l'enrobé.

La valeur retenue comme valeur de cohésion est la force maximale observée avant rupture à laquelle on soustrait la force générée par le frottement des granulats (force qui devient constante en fonction du temps après rupture).

### Protocole D : Fabrication et mesure de cohésion à coeur des enrobés à l'émulsion

Pour effectuer une mesure de cohésion à coeur, il faut fabriquer environ 900 g d'enrobé de la manière suivante :
- peser dans un bol en inox 800 g de granulat à la composition granulométrique requise ;
- ajouter le pourcentage d'eau requis par rapport au granulat ;
- mélanger le tout quelques secondes avec une spatule pour bien répartir l'eau sur tout le granulat ;
- ajouter rapidement la quantité d'émulsion de bitume requise sur le granulat ;
- mélanger avec une spatule jusqu'à la rupture de l'émulsion sur le granulat.

Les enrobés ainsi fabriqués sont stockés 1 heure dans le bol en conditions ambiantes du laboratoire, repris à la spatule et foisonnés à la main si nécessaire, puis placés dans un moule de Presse à Cisaillement Giratoire « PCG » (moule cylindrique de 100 mm de diamètre et d'une hauteur de 25 cm).

Le compactage des enrobés est effectué à la Presse à Cisaillement Giratoire (modèle Invelop Oy ICT-100RB) sous une pression de 0,6 MPa, avec un angle de débattement de 1°, pendant 120 tours ou girations.

Les éprouvettes ainsi fabriquées sont stockées pendant 1h en conditions ambiantes du laboratoire puis fracturées. La fracture des éprouvettes est effectuée en compression diamétrale à une vitesse de 200 mm/min à l'aide d'une presse (INSTRON, modèle 4482). La cohésion à coeur est définie comme étant la valeur maximale de la force de réaction de l'éprouvette sur la mâchoire lors de la déformation jusqu'à la fracture.

### EXEMPLES

L'amélioration des performances des produits routiers selon la présente invention a été jugée par comparaison entre formules d'enrobés selon l'art antérieur (enrobage avec émulsions fabriquées à 100% avec moulin colloïdal) et formules selon la présente invention. Pour que la comparaison soit plus facile, dans les exemples qui suivent, le même émulsifiant cationique (une polyamine commercialisée par CECA sous le nom de Polyram® SL) a été utilisé dans les différentes formules. Un changement d'émulsifiant ne sortirait en rien du périmètre de la présente invention.

### Exemple 1 : Impact de la composition du mélange d'émulsions sur les propriétés de cohésion de l'enrobé

On a préparé cinq émulsions différentes par mélange des deux émulsions suivantes :
- émulsion de diamètre médian 0,52 µm, fabriquée selon lé protocole B ci-dessus ;
- émulsion fabriquée à l'aide d'un groupe de laboratoire Emulbitume muni d'un moulin colloïdal Atomix C et de composition : 60% de bitume Total Donges 70/100, 14 kg/t de Polyram SL et de l'acide chlorhydrique pour un pH de phase aqueuse ajusté à 2. Cette émulsion a un diamètre médian de 4,5 µm.

Dans cet exemple, la quantité d'émulsifiant de l'émulsion standard a été volontairement fixée au même niveau que celui de l'émulsion de diamètre médian contrôlé afin de ne pas modifier la teneur en émulsifiant des différents mélanges, ce qui a permis d'isoler l'impact de la répartition granulométrique sur les performances de l'enrobé.

Les caractéristiques de ces émulsions sont données dans le Tableau 1 ci-après.

**Tableau 1 : Caractéristiques des émulsions ayant servi dans l'exemple.**

| Emulsion | Teneur en émulsion de diamètre médian 0,52 µm | Teneur en émulsion dite standard |
|---|---|---|
| E1 | 100 | 0 |
| E2 | 75 | 25 |
| E3 | 50 | 50 |
| E4 | 25 | 75 |
| E5 | 0 | 100 |

Avec chacune de ces émulsions, on a préparé un enrobé froid à la fois selon le Protocole C, 1^{ère} étape et 2^{ème} étape selon le Protocole D décrits plus haut. Les granulats utilisés sont des silico-calcaires commercialisés sous la dénomination "Abjat" et « Thiviers », dont la distribution granulométrique est la suivante :
28% granulat 0/2 « Thiviers »
12% granulat 0/3 « Abjat »
12% granulat 2/6 « Abjat »
48% granulat 4/6 « Abjat ».

La teneur en filler (particules de granulats passant au travers d'un tamis de 80 µm) est de l'ordre de 7% en poids. La teneur en eau d'ajout dans l'enrobé est de 4 g pour 100 g de granulats. La teneur en émulsion dans l'enrobé est de 9,5%.

La cohésion de surface et à coeur des enrobés ainsi fabriqués est testée à la fois selon le Protocole C, 3^{ème} étape, et le Protocole D décrits plus haut. Les résultats sont présentés dans le Tableau 2.

**Tableau 2 : Résultats de mesure de cohésion sur les enrobés fabriqués avec les émulsions décrites dans l'Exemple 1.**

| Emulsion utilisée pour l'enrobage | Cohésion de surface (kg) | Cohésion à coeur (kN) |
|---|---|---|
| E1 | 51 | 3 |
| E2 | 50 | 3,1 |
| E3 | 46 | 3,2 |
| E4 | 45 | 4,2 |
| E5 | 31 | 4,3 |

De façon très étonnante, les deux propriétés ne varient pas dans le même sens et on observe des phénomènes de plateau ou de changement de pente important qui font apparaître un optimum aux alentours d'un mélange 75% d'émulsion standard et 25% d'émulsion de diamètre médian 0,5 µm. Dans ces conditions, la cohésion à coeur est optimale et la cohésion de surface est améliorée de 50% par rapport à un enrobé réalisé avec une émulsion standard.

### Exemple 2 : Réglage de la stabilité de l'émulsion vis-à-vis du granulat

On prépare deux émulsions à 60% de bitume Total Donges 70/100 avec des dosages différents en Polyram® SL selon une méthode industrielle classique avec un moulin colloïdal (groupe de production de laboratoire de marque Emulbitume) :
- émulsion E6 à 4 kg/t de Polyram SL (basé sur l'émulsion) et acidifié avec HCl pour un pH de phase aqueuse de 2 de diamètre médian de 4,8 µm ;
- émulsion E5 à 14 kg/t de Polyram SL (basé sur l'émulsion) et acidifié avec HCl pour un pH de phase aqueuse de 2 de diamètre médian de 4,5 µm.

Ces deux émulsions sont mélangées chacune avec l'émulsion E1 de diamètre médian 0,52 µm fabriquée selon le protocole B décrit plus haut, dans le rapport 75%/25% déterminé comme optimal dans l'Exemple 1.

Un enrobé à froid est fabriqué avec chacun de ces mélange d'émulsions en comparaison avec les émulsions seules sur le mélange de granulat constitué par des silico-calcaires commercialisés sous la dénomination "Abjat" et « Thiviers », dont la distribution granulométrique est la suivante :
28% granulat 0/2 « Thiviers »
12% granulat 0/3 « Abjat »
12% granulat 2/6 « Abjat »
48% granulat 4/6 « Abjat ».

Pour chaque enrobage, on mesure le « temps de rupture » de l'émulsion et les cohésions à coeur et en surface comme décrit précédemment.

Le temps de rupture de l'émulsion est évalué sur 500 g de granulats dans un bol en inox : On pèse les granulats et on ajoute 4% d'eau, puis le mélange eau plus granulat est homogénéisé à la spatule métallique pendant une dizaine de secondes, on ajoute ensuite 9,5% d'émulsion et on malaxe à la spatule jusqu'à la rupture. Le temps de rupture est défini ici comme le temps au bout duquel on n'observe plus d'émulsion liquide sur les parois du bol durant le malaxage. Pour les applications routières visées dans la présente invention, on recherche plutôt des temps de rupture de l'ordre de 15 à 25 secondes. Plus court, l'enrobage sera mauvais en sortie de malaxeur, plus long, il y a un gros risque de prise en masse au stockage.
Les résultats sont synthétisés dans le Tableau 3.

**Tableau 3 : Résultats d'enrobage et de mesure de cohésion sur enrobés réalisés avec des émulsions de fabrication et compositions différentes.**

| Emulsion | Temps de rupture (s) | Observation enrobage | Cohésion de surface (kg) | Cohésion à coeur (kN) |
|---|---|---|---|---|
| E1 | 120 | Bien enrobé aspect gras | 51 | 3 |
| E5 | 65 | Bien enrobé aspect sec | 31 | 4,3 |
| E6 | 10 | Aspect sec enrobage très incomplet | 27 | 3,5 |
| 75% E5 / 25% E1 | 80 | Aspect sec bon enrobage | 45 | 4,2 |
| 75% E6 / 25% E1 | 20 | Aspect sec bon enrobage | 44 | 4,2 |

L'émulsion E1 de diamètre médian 0,52 µm seule présente de gros risques de prise en masse au stockage à cause du temps de rupture trop long lié à son fort dosage en émulsifiant, ce qui est confirmé par le résultat trop long obtenu avec l'émulsion standard E5 à 14 kg/t de Polyram SL. L'émulsion standard E6 très peu dosée en émulsifiant ne permet pas un enrobage suffisant mais un mélange entre E1 et E6 donne exactement le temps de rupture attendu avec une qualité d'enrobage excellente.

Grâce à la découverte objet de cette invention, ce mélange d'émulsions conduit non seulement à une cohésion à coeur du meilleur niveau observé pour cet enrobé à l'émulsion et une cohésion de surface au jeune âge améliorée de 50% par rapport à un enrobé réalisé avec une émulsion standard, mais encore à un temps de rupture de l'émulsion adapté au granulat et conforme aux nécessités des applications routières visées pour éviter les problèmes de maniabilité.

## Revendications

**1.** Matériau routier bitumineux obtenu par imprégnation, enrobage ou mise en contact d'un granulat, d'un matériau de recyclage, d'un agrégat d'enrobé ou d'un mélange de ces produits avec une émulsion bitumineuse (E), **caractérisé par le fait que** les particules de bitume de l'émulsion bitumineuse (E) utilisée pour l'imprégnation, l'enrobage ou la mise en contact comportent une fraction (F) représentant 10 à 40% des particules de bitume et étant d'un diamètre médian inférieur ou égal à 0,6 µm, de préférence compris entre 0,1 et 0,6 µm, le reste des particules de bitume de l'émulsion étant d'un diamètre médian supérieur ou égal à 1 µm, de préférence compris entre 1 et 20 µm.

**2.** Matériau selon la revendication 1, **caractérisé par le fait qu'**il consiste en enrobés à froid ou en graves-émulsions.

**3.** Matériau selon l'une des revendications 1 et 2, **caractérisé par le fait que** la fraction. (F) de particules de bitume a un diamètre médian inférieur ou égal à 0,55 µm, de préférence inférieur ou égal à 0,5 :m.

**4.** Matériau selon l'une des revendications 1 à 3, **caractérisé par le fait que** la fraction (F) représente 20 à 30% des particules de bitume.

**5.** Matériau selon l'une des revendications 1 à 4, **caractérisé par le fait que** le reste des particules de bitume de l'émulsion a un diamètre médian de 2 à 10 µm.

**6.** Matériau selon l'une des revendications 1 à 5, **caractérisé par le fait que** l'émulsion bitumineuse (E) est formée par le mélange d'au moins deux émulsions (A) et (B), dont au moins une (A) est composée de particules de bitume d'un diamètre médian inférieur ou égal à 0,6 µm, en particulier inférieur ou égal à 0,55 µm, de préférence inférieur ou égal à 0,5 :m, lesquelles constituent la fraction (F) précitée des particules de bitume, la ou les autres émulsions (B) étant composée (s) de particules d'un diamètre médian supérieur ou égal à 1 µm, en particulier les particules de la ou des émulsions (B) ayant un diamètre médian de 2 à 10 µm.

**7.** Matériau selon la revendication 6, **caractérisé par le fait que** la ou les émulsions (A) composées de particules de bitume d'un diamètre médian inférieur ou égal à 0,6 µm, en particulier inférieur ou égal à 0,55 µm, de préférence inférieur ou égal à 0,5 :m, représente(nt) 10 à 40% en poids, en particulier 20 à 30% en poids du mélange.

**8.** Matériau selon l'une des revendications 6 et 7, **caractérisé par le fait qu'**une émulsion composée de particules de bitume d'un diamètre médian inférieur ou égal à 0,6 µm a été préparée par le procédé comportant les étapes suivantes :
(a) le ou les tensio-actifs, éventuellement en présence d'au moins un acide dans le cas d'une émulsion cationique ou en présence d'au moins une base dans le cas d'une émulsion anionique, sont formulés sous la forme d'une solution aqueuse concentrée, en particulier à plus de 30% massique ;
(b) on procède à l'ajout progressif de bitume chauffé, à une température comprise entre 50 et 120°C et avec un débit contrôlé, à la solution concentrée de tensio-actif(s) maintenue sous agitation, jusqu'à ce que la teneur en bitume de l'émulsion à la fin de cette étape d'émulsification soit supérieure ou égale à 90% en poids ; puis
(c) la teneur en bitume de l'émulsion est abaissée jusqu'à une teneur comprise de préférence entre 60% et 80% en poids par dilution sous agitation avec de l'eau dont la température est comprise entre 20 et 90°C, et, de préférence, entre 40 et 80°C.

**9.** Matériau selon l'une des revendications 6 à 8, **caractérisé par le fait que** la ou les émulsions autres que celle(s) composée(s) de particules de bitume d'un diamètre médian inférieur ou égal à 0,6 µm, en particulier inférieur ou égal à 0,55 µm, de préférence inférieur ou égal à 0,5 :m, a ou ont une teneur en tensio-actif réglée pour adapter la stabilité du mélange d'émulsions au granulat à enrober.

**10.** Matériau selon l'un des revendications 1 à 9, **caractérisé par le fait que** la ou les émulsions bitumineuses utilisées pour l'enrobage, l'imprégnation ou la mise en contact contient ou contiennent au moins un tensio-actif anionique et, le cas échéant, au moins une base, ou au moins un tensio-actif cationique et, le cas échéant, au moins un acide, en particulier un tensio-actif cationique et, le cas échéant, au moins un acide.

**11.** Matériau selon la revendication 10, **caractérisé par le fait que** le ou les tensio-actifs cationiques est ou sont choisis parmi les alkyl(ène)polyamines, les alkyl(ène)polyamines oxyalkylées, les sels d'alkyl(ène)ammonium quaternaire, les alkyl(ène)amidoamines et leurs dérivés de cyclisation alkyl(ène)imidazolines, avec une chaîne alkyle comprenant entre 8 et 22 atomes de carbone, et les alkyl(ène) polyamines oxyalkylées.

**12.** Matériau selon l'une des revendications 1 à 11, **caractérisé par le fait que** la ou les émulsions bitumineuses utilisées pour l'enrobage, l'imprégnation et la mise en contact contiennent au moins un co-tensio-actif non ionique.

**13.** Utilisation d'un matériau tel que défini à l'une des revendications 1 à 12, pour former un tapis routier ou une chaussée de forte résistance au trafic dans les premières 24 heures.

**14.** Tapis routier obtenu par compactage d'un matériau tel que défini à l'une des revendications 1 à 12.

**15.** Emulsion de bitume susceptible d'être obtenue par mélange :
- d'au moins une émulsion de bitume composée de particules de diamètre médian inférieur ou égal à 0,6 cm (Emulsion A) ; et
- d'au moins une émulsion de bitume composée de particules de diamètre médian supérieur ou égal à 1 :m (Emulsion B),
les particules de bitume d'un diamètre médian inférieur ou égal à 0,6 :m de la ou des émulsions (A) représentant 10 à 40 % des particules de bitume totales des émulsions (A) et (B).

**16.** Emulsion de bitume selon la revendication 15, **caractérisée par le fait que** les particules de bitume de la ou des émulsions (A) ont un diamètre médian inférieur ou égal à 0,55 :m, de préférence inférieur ou égal à 0,5 :m.

**17.** Emulsion de bitume selon l'une des revendications 15 et 16, **caractérisée par le fait que** les particules de bitume d'un diamètre médian inférieur ou égal à 0, 6 :m de la ou des émulsions (A) représentent 20 à 30 %, des particules de bitume totales des émulsions (A) et (B).

**18.** Emulsion de bitume selon l'une des revendications 15 à 17, **caractérisée par le fait que** les particules de bitume de la ou des émulsions (B) ont un diamètre médian de 2 à 10 :m.

**19.** Emulsion de bitume selon l'une des revendications 15 à 18, **caractérisée par le fait que** la ou les émulsions (A) représente(nt) 10 à 40 % en poids, en particulier 20 à 30 % en poids du mélange.
